# EUROPEAN PATENT APPLICATION

(11) **EP 4 403 410 A1**
(43) Date of publication of application: **24.07.2024**
(21) Application number: 23152893.6
(22) Date of filing: 23.01.2023
(51) Int. Cl.: B60N 2/00, B60N 2/26, B60N 2/28, B60N 2/90

(54) **SAFETY SYSTEM FOR A CHILD SEAT'S SEATBELT SYSTEM, RETENTION SYSTEM FOR A CHILD SEAT, SEATBELT SYSTEM, VEHICLE AND USE OF A REMOTE DETECTOR**

(71) Applicant: VOLVO CAR CORPORATION, 405 31 Göteborg (SE)
(72) Inventor: RYDHED, Patrik, 405 31 Göteborg (SE); MÅRTENSSON, Emma, 405 31 Göteborg (SE); VON EICHWALD, Tor, 405 31 Göteborg (SE)
(74) Representative: Maiwald GmbH

(57) **Abstract**

The disclosure relates to a safety system (30) for a child seat's (24) seatbelt system (26). The safety system (30) comprises an occupancy detection unit (32) being configured to detect a presence of a child (28) in the child seat (24) and a fastening status detection unit (34) being configured to detect a fastening status of the seatbelt system (26). Moreover, the safety system (30) comprises a notification unit (36) being communicatively connected to the occupancy detection unit (32) and the fastening status detection unit (34). The notification unit (36) is configured to issue a notification if a presence of a child (28) is detected and the fastening status is detected to be non-fastened. At least one of the occupancy detection unit (32) and the fastening status detection unit (34) comprises a remote detector (40). Furthermore, a retention system (48) for a child seat (24) is described. The retention system (48) comprises a seatbelt system (26) and a safety system (30). Additionally, a seatbelt system (26), a vehicle (10) and a use of a remote detector (40) for detecting a presence of a child (28) in a child seat (24) and/or for detecting a fastening status of a seatbelt system (26) are presented.

## Description

The present disclosure relates to a safety system for a child seat's seatbelt system.

The present disclosure is additionally directed to a retention system for a child seat comprising a seatbelt system and such a safety system.

The present disclosure also is directed to a seatbelt system for such a retention system.

Furthermore, the present disclosure relates to a vehicle comprising such a safety system.

The present disclosure also is directed to a use of a remote detector.

Safety systems for seatbelt systems are generally known. The purpose of such safety systems is to detect improper fastening of the seatbelt system and issue a corresponding notification. Based thereon, a user of the vehicle in which the seatbelt system is provided can fasten the seatbelt correctly. Sometimes such safety systems are called seatbelt reminder system.

It is an objective of the present disclosure to improve the reliability of such safety systems, especially in connection with a child seat's seatbelt system.

The problem is at least partially solved or alleviated by the subject matter of the independent claims of the present disclosure, wherein further examples are incorporated in the dependent claims.

According to a first aspect, there is provided a safety system for a child seat's seatbelt system. The safety system comprises an occupancy detection unit being configured to detect a presence of a child in the child seat. Moreover, the safety system comprises, a fastening status detection unit being configured to detect a fastening status of the seatbelt system. Additionally, the safety system comprises a notification unit being communicatively connected to the occupancy detection unit and the fastening status detection unit. The notification unit is configured to issue a notification if a presence of a child is detected and the fastening status is detected to be "non-fastened". At least one of the occupancy detection unit and the fastening status detection unit comprises a remote detector. The notification being issued by the notification unit may be audible, visual, haptic or any combination of audible, visual and haptic. A haptic notification may comprise a vibration. Thus, the notification is easily perceivable by a user of the child seat's seat belt system and/or a vehicle in which the child seat is installed. The fastening status detection unit is configured to detect at least two fastening statuses which are "fastened" and "non-fastened". The fastening status "fastened" relates to a seatbelt system being correctly fastened. In any other case, the fastening status is "non-fastened". Using an occupancy detection unit and a fastening status detection unit in combination leads to a highly reliable safety system. This is due to the fact that false notifications, e.g. notifications being issued if the child seat is not occupied, may be avoided. It goes without saying that the safety system may be operated while driving and, thus, the fastening status detection unit may detect a transition from the status "fastened" to the status "non-fastened" while driving. The fact that at least one of the occupancy detection unit and the fastening status detection unit is a remote detector has several advantages. First of all, a remote detector is to be understood as a detector which does not need to contact the object or system for which it shall perform a detection. Rather, the remote detector may be provided at a distance bigger than zero. Consequently, the remote detector may also be designated as a contactless detector. Thus, such a remote detector does not need to be arranged in the child seat or close to the child seat which alleviates packaging issues in connection with the child seat. Moreover, due to the fact that the remote detector is arranged at a distance from the child seat, the remote detector is able to operate in combination with different types of child seats. In an example, the child seat may be an integrated child seat. Furthermore, the remote detector is able to operate in combination with different types of seatbelt systems of the child seat, e.g. a five-point seatbelt system. Altogether, the safety system may be flexibly used in a great variety of applications.

In a case in which the seatbelt status detection unit is not a remote detector, the seatbelt status detection unit may comprise a Hall element or any other suitable sensor which is arrangeable in or on a seatbelt buckle.

In a case in which the occupancy detection unit is not a remote detector, the occupancy detection unit may comprise a pressure sensor, a weight sensor, a capacitive sensor or any other suitable sensor which is arrangeable in a sitting area of the child seat.

In an example, both the occupancy detection unit and the fastening status detection unit comprise a remote detector. This covers two examples. In a first example, each of the occupancy detection unit and the fastening status detection unit comprises a remote detector. This means that two remote detectors are used in the safety system. In a second example, the occupancy detection unit and the fastening status detection unit comprise a common remote detector. This means that a single remote detector may be used in order to provide the functionality of the occupancy detection unit and the fastening status detection unit. In both examples, the safety system is particularly flexible as far as the type of the child seat and/or the type of seatbelt system is concerned.

In an example, the remote detector comprises at least one of an interior radar unit, an optical camera unit and an ultrasound unit. An interior radar unit, an optical camera unit and an ultrasound unit are able to generate a representation of at least a portion of a child seat including at least a portion of the seatbelt system of the child seat. In an example, the interior radar unit, the optical camera unit and the ultrasound unit are configured such that they can generate a representation of the child seat including the seatbelt system of the child seat. In a case in which the occupancy detection unit comprises the remote detector, a computer vision technique, e.g. an object recognition technique, may be applied on the detection result of the interior radar unit, the camera unit or the ultrasound unit. Consequently, using the remote detector, the presence of a child in the child seat may be detected. In a case in which the seatbelt status detection unit comprises the remote detector, a computer vision technique, e.g. an object recognition technique, may be applied on the detection results of the interior radar unit, the camera unit or the ultrasound unit. Consequently, using the remote detector, a position of at least a part of the seatbelt may be detected. Based thereon, a fastening status of the seatbelt may be determined. In simplified words, based on the detection result of the interior radar unit, the optical camera unit or the ultrasound unit, a location of at least a part of the seatbelt system may be determined and based on the location, it may be determined whether the seatbelt system is fastened or non-fastened. Thus, in all of the above examples, the presence of a child in the child seat and/or the fastening status of the seatbelt system may be determined with high reliability.

As has been mentioned before, using a remote detector does not require elements of the occupancy detection unit and/or elements of the fastening status detection unit to be integrated into the child seat. Consequently, the safety system of the present disclosure may be used together with a great variety of different child seats, among these relatively simple child seats not comprising any type of sensors or detectors.

In an example, the safety system further comprises a driving status detector being configured to detect whether a vehicle comprising the child seat is moving or not. This further increases the reliability of the safety systems since notifications may only be issued if the vehicle is moving.

In an example, the driving status detector comprises a GPS unit. In another example, the driving status detector comprises an interface unit being configured to be connected to a GPS unit of the vehicle and/or a tachometer unit of a vehicle.

In an example, the safety system further comprises a driving mode detector being configured to detect whether a vehicle comprising the child seat is in a driving mode or not. In this context, a driving mode is to be understood as an operational mode of the vehicle in which the vehicle is able to drive. Thus, when in the driving mode, the vehicle at least theoretically can start driving. The driving mode can for example be engaged by turning an ignition key or by operating a start button or start switch. Additionally or alternatively, the driving mode can be engaged by putting a transmission into a drive mode. In other examples, the driving mode can be engaged without requiring a specific activity of the driver. In such cases, the driving mode can be engaged by remotely detecting an identification means of the driver. In such a safety system, a notification would only be issued if the vehicle is detected to be in the driving mode. This further increases the reliability of the safety systems.

It is noted that a vehicle may comprise both a driving status detector and a driving mode detector.

According to a second aspect, there is provided a retention system for a child seat. The retention system comprises a seatbelt system and a safety system according to the present disclosure. The seatbelt system comprises at least one marker being configured to be detected by the remote detector. In other words, the marker and the remote detector are matched such that the seatbelt system may be detected with high precision and reliability using the marker. The marker may be an element being fixedly connected to the seatbelt system or being integrated into the seatbelt system.

In an example, the marker is at least partially a reflector. Thus, if the remote detector comprises a radar unit, the reflector is reflective for radar waves. In a case in which the remote detector comprises an optical camera unit, the reflector is a reflector for light in the visible spectrum. If the remote detector comprises an ultrasound unit, the reflector is reflective for ultrasound. In more general words, the reflector is configured to reflect an type of radiation or signal that can be reliably detected by the remote detector. In all alternatives, the fact that the marker is at least partially a reflector ensures reliable detectability of the marker and, thus, the seatbelt system.

According to a third aspect, there is provided a seatbelt system for a retention system according to the invention. The seatbelt system comprises at least one marker being configured to be detected by the remote detector. Such a seatbelt system may be detected with high precision and reliability using the marker and a corresponding remote detector. The marker may be an element being fixedly connected to the seatbelt system or being integrated into the seatbelt system. As has been mentioned before, the marker can be at least partially a reflector.

According to a fourth aspect, there is provided a vehicle comprising a safety system according to the present disclosure. Thus, in such a vehicle, a notification is provided if the seatbelt system is not properly used. This increases the safety of the occupants of such a vehicle.

In an example, the remote detector is located in or behind an interior panel of the vehicle, in or behind a head lining of the vehicle, in a seat part or in a dashboard part. In a case in which the remote detector is located in a seat part, the remote detector may be located in a headrest of the seat. In all examples, the remote detector forms part of the vehicle and not of the child seat as such. Thus, the remote detector may be used in connection with a great variety of child seats. Consequently, such a vehicle offers a high level of safety independent from the type of the child seat being used. Moreover, in all examples, the remote detector is provided in a protected location such that the use of the vehicle is not hindered by the detector.

In an example, the vehicle comprises an integrated child seat. This means that the child seat is fixedly connected to the remaining parts of the vehicle, e.g. to a seat or bench of the vehicle. The child seat may be configured such that it can selectively assume an operational position in which the child may sit in the child seat and a stowed position in which the child seat may not be used. In the stowed position of the child seat, the seat or bench in which the child seat may be integrated, may be used by an adult.

In an example, the interior panel is a door panel, a pillar cover or a cargo area panel. Such panels or covers allow for a safe and reliable installation of the remote detector.

In an example, a child seat is arranged inside the vehicle and the child seat is facing rearwards with respect to a standard forward driving direction of the vehicle. As has been mentioned before, the child seat may be an integrated child seat or a non-integrated child seat. The use of the safety system in combination with a rearward-facing child seat is advantageous since a fastening status of the child seat's seatbelt system is difficult to assess by an adult user of the vehicle.

According to a fifth aspect, there is provided a use of a remote detector for detecting a presence of a child in a child seat and/or for detecting a fastening status of a seatbelt system. Using a remote detector renders the detection of the presence of a child in the child seat and/or the detection of a fastening status independent from the specific child seat and the specific seatbelt system used in the child seat. In other words, using a remote detector renders the detection of the presence of a child in the child seat and the detection of the fastening status flexible as far as the use of child seat and seatbelt systems is used.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawing.
- Figure 1: shows a vehicle according to the present disclosure with a safety system according to the present disclosure, the vehicle having installed therein a child seat comprising a seat belt system, wherein the seat belt system and the safety system form a retention system according to the present disclosure and wherein a remote detector is used,
- Figure 2: shows the safety system of Figure 1 in an isolated representation, and
- Figures 3 to 5: show further examples of the safety system according to the present disclosure.

The Figures are merely schematic representations and serves only to illustrate examples of the disclosure. Identical or equivalent elements are in principle provided with the same reference signs.

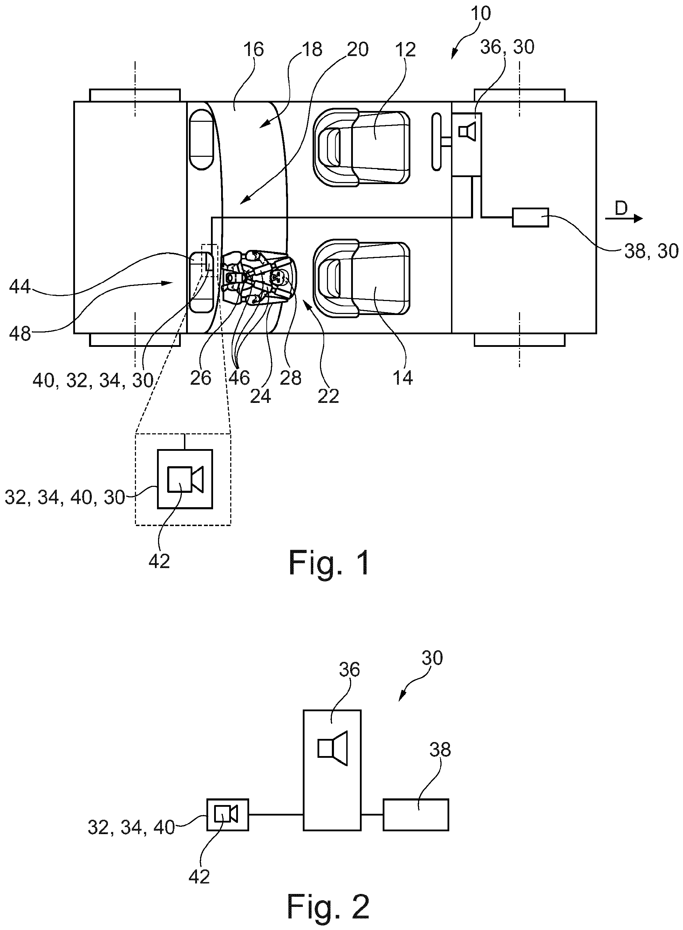

Figure 1 shows a vehicle 10. In order to be able to see the interior of the vehicle 10, the vehicle 10 is represented without a roof portion.

The vehicle 10 comprises a driver seat 12, a front passenger seat 14 and a rear bench seat 16.

The rear bench seat 16 comprises a total of three seats which, with respect to a standard forward driving direction D of the vehicle 10 may be designated as left seat 18, middle seat 20 and the right seat 22.

A child seat 24 is arranged on the right seat 22. More precisely, in the present example the right seat 22 and the left seat 18 of the rear bench seat 16 are convertible seats comprising an integrated child seat 24. In the example shown in the Figure, the left seat 18 is in an adult configuration, wherein the right seat 22 is in a child configuration which means that a child seat 24 is provided as the right seat 22.

The child seat 24 is facing rearwards with respect to the standard forward driving direction D.

The child seat 24 comprises a seatbelt system 26 which in the present example is a five-point seatbelt system.

In Figure 1, the seatbelt system 26 is represented in a fastened state. More precisely, a child 28 is sitting in the child seat 24 and is secured therein using the seatbelt system 26.

The vehicle 10 comprises a safety system 30.

The safety system 30 comprises an occupancy detection unit 32 being configured to detect a presence of a child in the child seat 24.

Moreover, the safety system 30 comprises a fastening status detection unit 34 being configured to detect a fastening status of a seatbelt system 26.

Beyond that, the safety system 30 comprises a notification unit 36.

The notification unit 36 is communicatively connected to the occupancy detection unit 32 and to the fastening status detection unit 34.

Furthermore, the safety system 30 comprises a driving status detector 38 being configured to detect whether the vehicle 10 is moving or not. The driving status detector 38 is communicatively connected to the notification unit 36.

Thus, the notification unit 36 is configured to issue a notification if the vehicle 10 is detected to be moving and if the presence of the child 28 is detected and if the fastening status of the seatbelt system 26 is detected to be "non-fastened".

Following the notification, an adult user of the vehicle 10 may stop the vehicle 10 and transition the fastening status of the seat belt system 26 to "fastened". In other words, an adult user may take care that the seatbelt system 26 is correctly fastened.

In the present example, both the occupancy detection unit 32 and the fastening status detection unit 34 comprises a remote detector 40. In the present example, the remote detector comprises an optical camera unit 42.

Moreover, the remote detector 40 is a common detector. This means that the remote detector 40 forms part of the occupancy detection unit 32 and the fastening status detection unit 34 (see also Figure 2).

In the present example, the remote detector 40, i.e. the optical camera unit 42 is installed in a headrest 44 of the right seat 22 such that the child seat 24 and its seatbelt system 26 are located in a field of view of the optical camera unit 42.

Furthermore, in order to enhance the detectability of the seatbelt system 26, in the present example, the seatbelt system comprises 26 a marker 46 being configured to be detected by the remote detector 40, i.e. the optical camera unit 42. In the present example, the marker is a reflector.

The seatbelt system 26 and the safety system 30 together form a retention system 48 for the child seat 24.

Altogether, in the vehicle 10, the remote detector 40 is used for detecting the presence of the child 28 in a child seat 24 and for detecting a fastening status of the seatbelt system 26.

It is understood that the location of the remote detector 40 is just an example. In other examples, the remote detector 40 may be located in or behind an interior panel, e.g. a door panel, a pillar cover or a cargo area panel, or in a dashboard part or in or behind a head lining of the vehicle. It is, of course important that the child seat 24 and the seatbelt system 26 to be supervised by the remote detector 40 is located in the field of view of the remote detector 40. In another example, more than one remote detector 14 may be installed in the vehicle 10 in order to be able to provide a safety system 30 for different locations of the child seat 24 or for a plurality of child seats 24 within the vehicle 10.

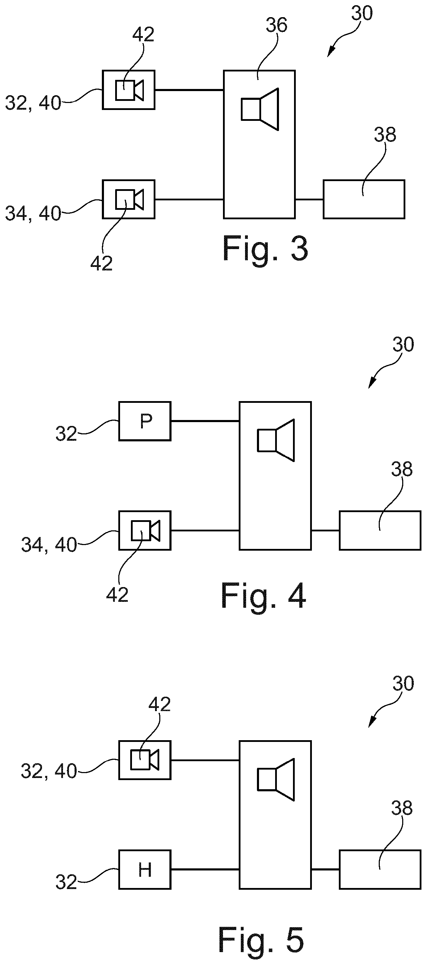

Figures 3 to 5 show further examples of the safety system 30. In the following, only the differences with respect to the example of Figures 1 and 2 will be explained.

In the example of Figure 3, a total of two remote detectors 40 is used. One of the remote detectors 40 forms part of the occupancy detection unit 32. The other one of the remote detectors 40 forms part of the fastening status detection unit 34. Thus, in contrast to the example of Figures 1 and 2, no common remote detector 40 is used.

In the example of Figure 4, only the fastening status detection unit 34 uses a remote detector 40. The occupancy detection unit 32 uses a pressure sensor P for detecting the presence of the child 28. Such a pressure sensor P is known. It is noted that instead or in addition to the pressure sensor P any other suitable sensor may be used, especially the sensors mentioned above.

In the example of Figure 5, only the occupancy detection unit 32 uses a remote detector 40. The fastening status detection unit 34 uses a hall element H which can be integrated into the buckle of a seatbelt system 26. Such a hall element H is known. It is noted that instead or in addition to the hall element H any other suitable sensor may be used, especially the sensors mentioned above.

It is noted that in all of the above examples, the use of an optical camera unit 42 as the remote detector is just one out of several options. In other examples, the remote detector may be an interior radar unit or an ultrasound unit.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: driver seat
- 14: front passenger seat
- 16: rear bench seat
- 18: left seat
- 20: middle seat
- 22: right seat
- 24: child seat
- 26: seatbelt system
- 28: child
- 30: safety system
- 32: occupancy detection unit
- 34: fastening status detection unit
- 36: notification unit
- 38: driving status detector
- 40: remote detector
- 42: optical camera unit
- 44: headrest
- 46: marker
- 48: retention system

- D: standard forward driving direction
- P: pressure sensor
- H: Hall element

## Claims

1. A safety system (30) for a child seat's (24) seatbelt system (26), comprising an occupancy detection unit (32) being configured to detect a presence of a child (28) in the child seat (24), a fastening status detection unit (34) being configured to detect a fastening status of the seatbelt system (26), and a notification unit (36) being communicatively connected to the occupancy detection unit (32) and the fastening status detection unit (34),
wherein the notification unit (36) is configured to issue a notification if a presence of a child (28) is detected and the fastening status is detected to be non-fastened, and wherein at least one of the occupancy detection unit (32) and the fastening status detection unit (34) comprise a remote detector (40).

2. The safety system (30) of claim 1, wherein both the occupancy detection unit (32) and the fastening status detection unit (34) comprise a remote detector (40).

3. The safety system (30) of claim 1 or 2, wherein the remote detector (40) comprises at least one of an interior radar unit, an optical camera unit (42) and an ultrasound unit.

4. The safety system (30) of any one of the preceding claims, further comprising a driving status detector (38) being configured to detect whether a vehicle (10) comprising the child seat (24) is moving or not.

5. The safety system (30) of any one of the preceding claims, further comprising a driving mode detector being configured to detect whether a vehicle (10) comprising the child seat (24) is in a driving mode or not.

6. A retention system (48) for a child seat (24), comprising a seatbelt system (26) and a safety system (30) according to any one of the preceding claims, wherein the seatbelt system (26) comprises at least one marker (46) being configured to be detected by the remote detector (40).

7. The retention system (48) of claim 6, wherein the marker (46) is at least partially a reflector.

8. A seatbelt system (26) for a retention system (48) of claim 6 or 7, comprising at least one marker (46) being configured to be detected by the remote detector (40).

9. A vehicle (10) comprising a safety system (30) according to any one of claims 1 to 4.

10. The vehicle (10) of claim 9, wherein the remote detector (40) is located in or behind an interior panel of the vehicle (10), in or behind a head lining of the vehicle (10), in a seat part or in a dashboard part.

11. The vehicle (10) of claim 10, wherein the interior panel is a door panel, a pillar cover or a cargo area panel.

12. The vehicle (10) of any one of claims 9 to 11, wherein a child seat (24) is arranged inside the vehicle (10) and wherein the child seat (24) is facing rearwards with respect to a standard forward driving direction (D) of the vehicle (10).

13. A use of a remote detector (40) for detecting a presence of a child (28) in a child seat (24) and/or for detecting a fastening status of a seatbelt system (26).

## Amended claims

### Amended claims in accordance with Rule 137(2) EPC.

1. A safety system (30) for a child seat's (24) seatbelt system (26), comprising an occupancy detection unit (32) being configured to detect a presence of a child (28) in the child seat (24), a fastening status detection unit (34) being configured to detect a fastening status of the seatbelt system (26), a notification unit (36) being communicatively connected to the occupancy detection unit (32) and the fastening status detection unit (34), and a driving status detector (38) being configured to detect whether a vehicle (10) comprising the child seat (24) is moving or not,
wherein the notification unit (36) is configured to issue a notification if a presence of a child (28) is detected and the fastening status is detected to be non-fastened, and wherein at least one of the occupancy detection unit (32) and the fastening status detection unit (34) comprise a remote detector (40).

2. The safety system (30) of claim 1, wherein both the occupancy detection unit (32) and the fastening status detection unit (34) comprise a remote detector (40).

3. The safety system (30) of claim 1 or 2, wherein the remote detector (40) comprises at least one of an interior radar unit, an optical camera unit (42) and an ultrasound unit.

4. The safety system (30) of any one of the preceding claims, further comprising a driving mode detector being configured to detect whether a vehicle (10) comprising the child seat (24) is in a driving mode or not.

5. A retention system (48) for a child seat (24), comprising a seatbelt system (26) and a safety system (30) according to any one of the preceding claims, wherein the seatbelt system (26) comprises at least one marker (46) being configured to be detected by the remote detector (40).

6. The retention system (48) of claim 5, wherein the marker (46) is at least partially a reflector.

7. A seatbelt system (26) for a retention system (48) of claim 5 or 6, comprising at least one marker (46) being configured to be detected by the remote detector (40).

8. A vehicle (10) comprising a safety system (30) according to any one of claims 1 to 4.

9. The vehicle (10) of claim 8, wherein the remote detector (40) is located in or behind an interior panel of the vehicle (10), in or behind a head lining of the vehicle (10), in a seat part or in a dashboard part.

10. The vehicle (10) of claim 9, wherein the interior panel is a door panel, a pillar cover or a cargo area panel.

11. The vehicle (10) of any one of claims 8 to 10, wherein a child seat (24) is arranged inside the vehicle (10) and wherein the child seat (24) is facing rearwards with respect to a standard forward driving direction (D) of the vehicle (10).
